# EUROPEAN PATENT APPLICATION

(11) **EP 3 804 922 A1**
(43) Date of publication of application: **14.04.2021**
(21) Application number: 19812368.9
(22) Date of filing: 29.05.2019
(51) Int. Cl.: B25J 19/00

(54) **SCAVENGING DEVICE, ROBOT SYSTEM PROVIDED WITH SAME, AND SCAVENGING METHOD**

(30) Priority: 29.05.2018 JP 2018102159
(71) Applicant: Kawasaki Jukogyo Kabushiki Kaisha, Hyogo 650-8670 (JP)
(72) Inventor: DEMURA, Nobuhiro, Hyogo 650-8670 (JP); OSAKO, Shingo, Hyogo 650-8670 (JP); YONEYAMA, Masato, Hyogo 650-8670 (JP); TOKUMOTO, Akihiro, Hyogo 650-8670 (JP)
(74) Representative: Witte, Weller & Partner Patentanwälte mbB
(86) International application number: PCT/JP2019/021268
(87) International publication number: WO 2019/230790

(57) **Abstract**

A purging device configured to purge a container defining a periphery of a pressurized explosion-proof structure by supplying protective gas into the container is provided. A purge controlling module controls a flow rate adjusting device to supply the protective gas into the container to purge during a purging period including at least two main periods and at least one sub period. The main period and the sub period are set alternately on a time axis. A maximum supply flow rate per unit time during the sub period is at or below 10% of a maximum supply flow rate per unit time during the last main period, and at or below 10% of a maximum supply flow rate per unit time during the next main period.

## Description

### TECHNICAL FIELD

The present disclosure relates to a purging device, a robot system including the purging device, and a purging method.

### BACKGROUND ART

Conventionally, purging devices are known, which purge a container defining a periphery of a pressurized explosion-proof structure by supplying protective gas into the container. One example of such purging devices is an industrial robot disclosed in Patent Document 1.

The industrial robot of Patent Document 1 carries out the purging when a suspended period of an explosion-proof device is longer than a reference suspended period. On the other hand, when the suspended period of the explosion-proof device is shorter than the reference suspended period, a robot system is started after gas is supplied.

### [Reference Document of Conventional Art]

### [Patent Document]

[Patent Document 1] JP1997-168991A

### DESCRIPTION OF THE DISCLOSURE

### [Problem to be Solved by the Disclosure]

According to the configuration disclosed in Patent Document 1, the robot system can be improved in its operational efficiency by not carrying out the purging if considered to be no problem in explosion-proof when the robot system is started again immediately after being suspended. However, Patent Document 1 has a problem that a purging duration is long when purged.

Therefore, one purpose of the present disclosure is to provide a purging device, a robot system including the purging device, and a purging method, capable of shortening a purging duration.

### [Summary of the Disclosure]

In order to solve the above problem, a purging device according to one aspect of the present disclosure is provided, which purges a container defining a periphery of a pressurized explosion-proof structure by supplying protective gas into the container. The purging device includes a protective gas supplying source, a passage configured to introduce the protective gas from the protective gas supplying source into the container, a flow rate adjusting device configured to adjust a flow rate of the protective gas supplied from the protective gas supplying source into the container, and a purge controlling module configured to purge by controlling the flow rate adjusting device. The purge controlling module controls the flow rate adjusting device to supply the protective gas into the container to purge during a purging period including at least two main periods and at least one sub period. The main period and the sub period are set alternately on a time axis. A maximum supply flow rate per unit time during the sub period is at or below 10% of a maximum supply flow rate per unit time during the last main period, and at or below 10% of a maximum supply flow rate per unit time during the next main period.

According to this configuration, by supplying the protective gas into the container during the purging period to purge so that the maximum supply flow rate per unit time during the sub period is at or below 10% of the maximum supply flow rate per unit time during the last main period, and at or below 10% of the maximum supply flow rate per unit time during the next main period, the purging duration can be shortened.

The purge controlling module may control the flow rate adjusting device to set the maximum supply flow rate per unit time during the sub period to zero so that the protective gas is intermittently supplied into the container during the purging period to purge.

According to this configuration, the effects achieved by the present disclosure can be remarkable.

The purge controlling module may control the flow rate adjusting device to supply the protective gas into the container to purge during the purging period so that a maximum supply flow rate per unit time during a first main period is larger than a maximum supply flow rate per unit time during a second main period.

According to this configuration, the effects achieved by the present disclosure can be remarkable.

The flow rate adjusting device may include a control valve provided to the passage. The purge controlling module may adjust an opening of the control valve so as to control the flow rate of the protective gas supplied into the container.

According to this configuration, the purging duration can be shortened with a simple structure.

In order to solve the above problem, a robot system according to one aspect of the present disclosure is provided, which includes the purging device described above, and a robot including the pressurized explosion-proof structure. The robot includes a robotic arm, an end effector attached to a tip-end part of the robotic arm, and a robot controlling module configured to control the robotic arm and the end effector. At least a part of the robotic arm constitutes the container.

According to this configuration, by using the purging device, the purging duration can be shortened in the robot system provided with the robot including the pressurized explosion-proof structure.

The robot system may further include a partition configured to divide a first area in which explosive atmosphere exists from a second area in which the explosive atmosphere does not exist. The robotic arm and the end effector may be placed in the first area, and the protective gas supplying source, the purge controlling module, and the robot controlling module may be placed in the second area.

According to this configuration, safety of the robot system can be secured.

In order to solve the above problem, according to one aspect of the present disclosure, a method of purging a container defining a periphery of a pressurized explosion-proof structure by supplying protective gas into the container is provided, which includes the steps of preparing the pressurized explosion-proof structure and the purging device described above (First Step), attaching the purging device to the pressurized explosion-proof structure (Second Step) after First Step, and controlling the flow rate adjusting device by the purge controlling module to supply the protective gas into the container to purge during a purging period including at least two main periods and at least one sub period (Third Step) after First and Second Steps. The main period and the sub period are set alternately on a time axis, and a maximum supply flow rate per unit time during the sub period is at or below 10% of a maximum supply flow rate per unit time during the last main period, and at or below 10% of a maximum supply flow rate per unit time during the next main period.

According to this configuration, by supplying the protective gas into the container during the purging period to purge so that the maximum supply flow rate per unit time during the sub period is at or below 10% of the maximum supply flow rate per unit time during the last main period, and at or below 10% of the maximum supply flow rate per unit time during the next main period, the purging duration can be shortened.

### [Effect of the Disclosure]

The present disclosure can provide the purging device, the robot system including the purging device, and the purging method, capable of shortening the purging duration.

### BRIEF DESCRIPTION OF DRAWINGS

Fig. 1 is a schematic view illustrating the entire configuration of a purging device and a robot system including the purging device according to one embodiment of the present disclosure.
Fig. 2 is a schematic view illustrating a part of the purging device and an internal structure of a robot according to one embodiment of the present disclosure.
Figs. 3(A) and 3(B) are graphs schematically illustrating effects when purging is carried out by the robot system according to one embodiment of the present disclosure.
Figs. 4(A) to 4(C) are schematic diagrams illustrating the effects when purging is carried out by the robot system according to one embodiment of the present disclosure.
Figs. 5(A) and 5(B) are graphs schematically illustrating effects when purging is carried out by a modification of the robot system according to one embodiment of the present disclosure.

### MODE FOR CARRYING OUT THE DISCLOSURE

### (Entire Configuration)

Hereinafter, a purging device, a robot system including the purging device, and a purging method according to one embodiment of the present disclosure are described with reference to the drawings. Note that the present disclosure is not limited to this embodiment. Moreover, below, the same reference characters are given to the same or corresponding components throughout the drawings to omit redundant description.

### (Robot System 10)

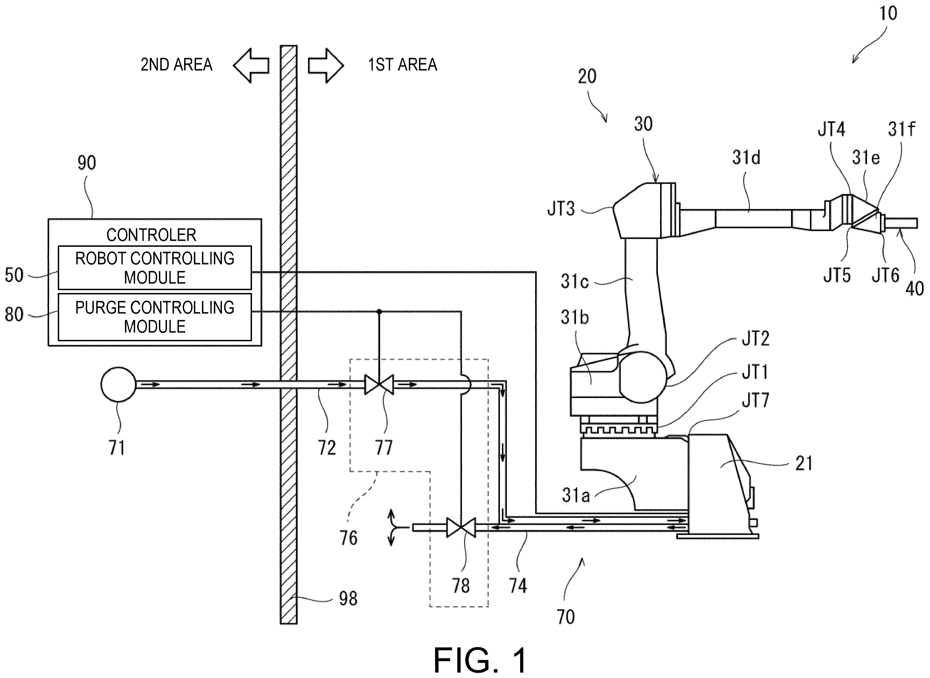

Fig. 1 is a schematic view illustrating the entire configuration of the purging device and the robot system including it according to this embodiment. As illustrated in Fig. 1, a robot system 10 includes a robot 20 which performs a painting work in a first area where explosive atmosphere exists, a purging device 70 which supplies protective gas into a container 60 defining a periphery of a pressurized explosion-proof structure included in the robot 20 so as to purge the container 60, and a controller 90 which controls the robot 20 and the purging device 70.

The robot system 10 according to this embodiment also includes a partition 98 which divides the first area where the explosive atmosphere exists from a second area where it does not exist. A flow rate adjusting device 76, a pedestal 21, a robotic arm 30, and an end effector 40 (described later) are placed in the first area. Moreover, a protective gas supplying source 71 (described later) and the controller 90 are placed in the second area.

The robot 20 according to this embodiment is a painting robot which performs painting to an automobile, etc. Therefore, the first area is a painting place in this embodiment. Atmosphere in the painting place is mixed with vaporized gas of organic solvents contained in paint, and often becomes flammable gas (or explosive gas). If electrical equipment is used in such a first area without any measure, an explosion may occur due to a spark induced by supplying power.

The robot 20 is provided with a plurality of electrical equipment such as a servomotor 32 (described later) inside the container 60 defining a part of the periphery of the robot 20. Therefore, before the robot 20 is energized, flammable gas which entered into the container 60 is required to be eliminated. Thus, purging is performed by supplying protective gas into the container 60 using the purging device 70.

### (Robot 20)

The robot 20 includes the pedestal 21, the robotic arm 30 coupled to the pedestal 21, the end effector 40 attached to a tip-end part of the robotic arm 30, and a robot controlling module 50 which controls the robotic arm 30 and the end effector 40 to perform the painting work.

### (Robotic Arm 30)

The robotic arm 30 includes seven joint shafts JT1-JT7, and six links 31a-31f serially coupled therebetween via these joint shafts. Each of the joint shafts JT1-JT7 of the robotic arm 30 is provided to be rotatable by the servomotor 32 (described later).

The first joint shaft JT1 couples a tip-end part of the first link 31a and a base-end part of the second link 31b so as to be rotatable by a servomotor 32a about a vertical axis. The second joint shaft JT2 couples a tip-end part of the second link 31b and a base-end part of the third link 31c so as to be rotatable by a servomotor 32b about a horizontal axis in a plane where a front-and-rear direction and an up-and-down direction of the robot 20 intersect.

The third joint shaft JT3 couples a tip-end part of the third link 31c and a base-end part of the fourth link 31d so as to be rotatable by a servomotor 32c about a horizontal axis in a plane where the front-and-rear direction and the up-and-down direction of the robot 20 intersect. The fourth joint shaft JT4 couples a tip-end part of the fourth link 31d and a base-end part of the fifth link 31e so as to be rotatable in a twisted manner by a servomotor 32d. The fifth joint shaft JT5 couples a tip-end part of the fifth link 31e and a base-end part of the sixth link 3 If so as to be rotatable in the twisted manner by a servomotor 32e. The sixth joint shaft JT6 couples a tip-end part of the sixth link 3 If (i.e., a tip-end part of the robotic arm 30) and a base-end part of the end effector 40 so as to be rotatable in the twisted manner by a servomotor 32f. Then, the seventh joint shaft JT7 couples the pedestal 21 and a base-end part of the first link 31a so as to be rotatable by a servomotor 32g about a horizontal axis in a plane where a left-and-right direction and the up-and-down direction of the robot 20 intersect.

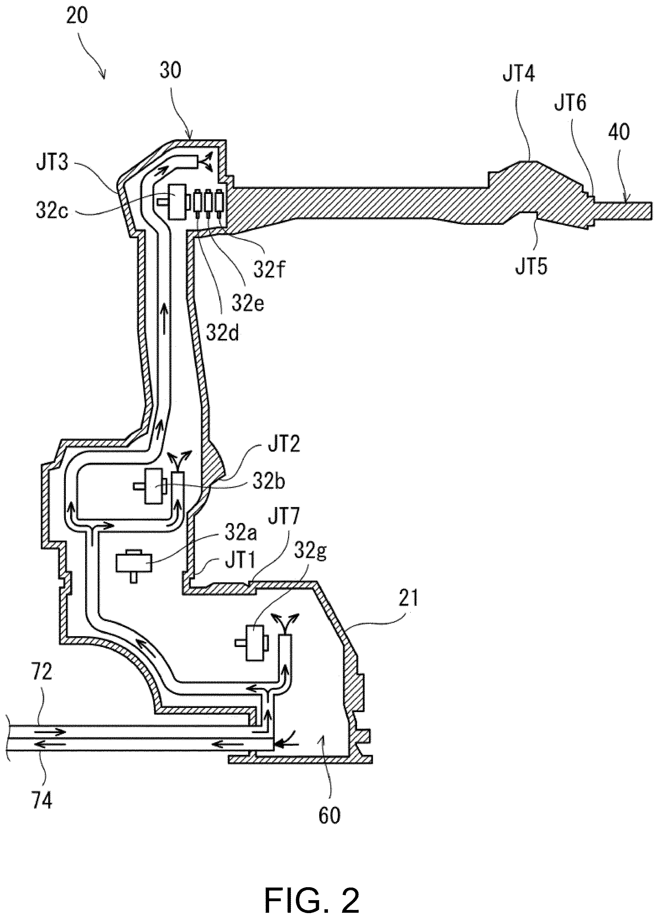

Fig. 2 is a schematic view illustrating a part of the purging device and an internal structure of the robot according to this embodiment. As illustrated in Fig. 2, the pedestal 21 and a part of the robotic arm 30 constitute the container 60.

As illustrated in Fig. 2, the servomotors 32a-32c and 32g are provided connectedly to the respective joint shafts to be rotated, while the servomotors 32d-32f are provided separately from the respective joint shafts to be rotated. In detail, the servomotors 32d-32f are provided adjacently to each other near the third joint shaft JT3, and rotate the joint shafts separated therefrom via a wire harness, respectively. All of the servomotors 32a-32g are provided inside the container 60.

### (End Effector 40)

In this embodiment, the end effector 40 is a paint gun used for spraying paint supplied from a paint supplying hose (not illustrated), to a vehicle body of the automobile, etc.

### (Robot Controlling Module 50)

The robot controlling module 50 is provided inside the controller 90 together with a purge controlling module 80 (described later). Although a detailed configuration of the robot controlling module 50 is not particularly limited, for example, it is implemented by a known processor (e.g., a CPU) operating in accordance with a program stored in a memory.

### (Purging Device 70)

The purging device 70 includes the protective gas supplying source 71, a supplying passage 72 (passage) which introduces protective gas from the protective gas supplying source 71 into the container 60, the flow rate adjusting device 76 which adjusts a flow rate of the protective gas supplied from the protective gas supplying source 71 into the container 60, and the purge controlling module 80 which controls the flow rate adjusting device 76 to purge the container 60.

### (Protective Gas Supplying Source 71)

The protective gas supplying source 71 is provided in the second area. In this embodiment, the protective gas is air in the atmosphere, for example.

### (Supplying Passage 72)

As illustrated in Figs. 1 and 2, the supplying passage 72 extends from the protective gas supplying source 71 in the second area into the container 60 of the robot 20 provided in the first area. In detail, the supplying passage 72 is inserted into the container 60 through a through-hole formed in the pedestal 21 of the robot 20 so as to extend to the most distal part inside the container 60 (i.e., to the third joint shaft JT3), and the protective gas is supplied from a tip-end part of the supplying passage 72.

Note that the supplying passage 72 has a branch passage extending to near the servomotor 32b which rotates the second joint shaft JT2, and supplies the protective gas from a tip-end part of the branch passage. Moreover, the supplying passage 72 has a branch passage extending to near the servomotor 32g which rotates the seventh joint shaft JT7, and supplies the protective gas from a tip-end part of the branch passage.

### (Discharging Passage 74)

The protective gas supplied into the container 60 is discharged from the container 60 through a discharging passage 74. The discharging passage 74 extends outside the container 60 through a through-hole formed in the pedestal 21. Since the pressure inside the container 60 is higher than the atmospheric pressure, the protective gas supplied into the container 60 through the supplying passage 72 is discharged outside the container 60 while being sucked by a tip-end part of the discharging passage 74.

### (Flow Rate Adjusting Device 76 and Purge Controlling Module 80)

The flow rate adjusting device 76 includes a first control valve 77 (control valve) provided to the supplying passage 72, and a second control valve 78 provided to the discharging passage 74. Moreover, the purge controlling module 80 is provided inside the controller 90 together with the robot controlling module 50. Although a detailed configuration of the purge controlling module 80 is not particularly limited, similarly to the robot controlling module 50, it may be implemented by a known processor (e.g., a CPU) operating in accordance with a program stored in a memory.

Then, the purge controlling module 80 adjusts an opening of the first control valve 77 to control the flow rate of the protective gas supplied into the container 60. At this time, the purge controlling module 80 may acquire a pressure of the protective gas detected by a pressure sensor (not illustrated) and a flow rate of the protective gas detected by a flow rate sensor (also not illustrated), which are provided to the supplying passage 72, so as to control the flow rate of the protective gas supplied into the container 60 based on the acquired pressure and flow rate.

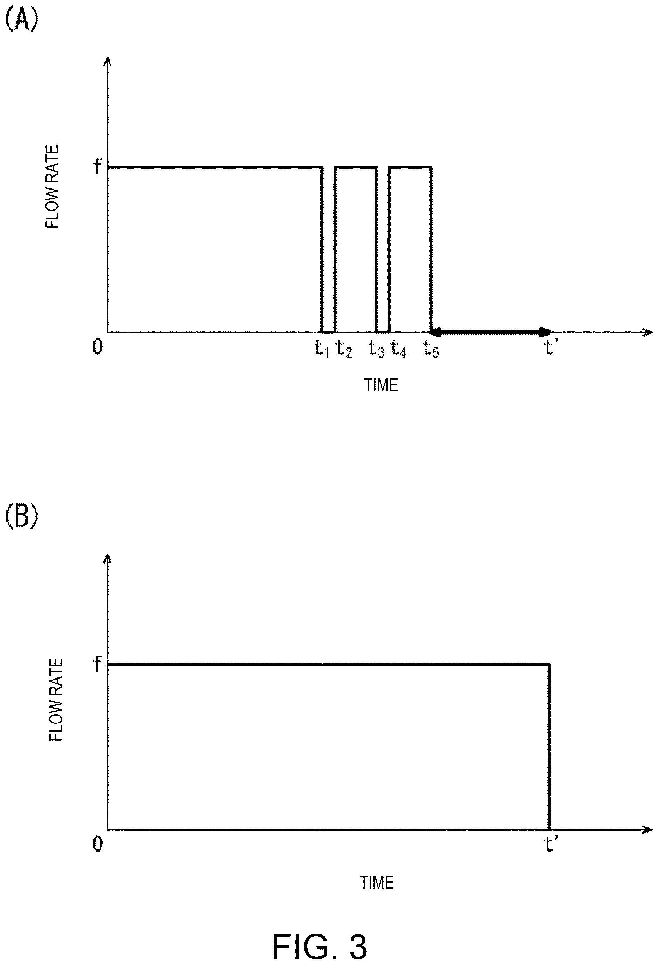

Fig. 3(A) illustrates a graph indicating a relation between the flow rate of the protective gas supplied into the container 60 and time. Fig. 3(B) illustrates a similar graph in a case where the flow rate of the protective gas supplied into the container 60 is not changed, like the conventional method.

As illustrated in Fig. 3(A), the purge controlling module 80 continually supplies the protective gas into the container 60 for a given period of time from the start of purging to a time t₁. Next, the purge controlling module 80 suspends the supply of the protective gas into the container 60 from the time t₁ to a time t₂, and then, supplies the protective gas into the container 60 from the time t₂ to a time t₃. Finally, the purge controlling module 80 suspends the supply of the protective gas into the container 60 from the time t₃ to a time t₄, and supplies the protective gas into the container 60 from the time t₄ to a time t₅.

For example, the given period during which the protective gas is continually supplied from the start of purging (i.e., the period t₁) may be about 10 minutes. The period during which the supply of the protective gas is suspended (i.e., each of the periods t₂-t₁ and t₄-t₃) may be about 30 seconds. Moreover, the period during which the protective gas is again supplied after suspending the supply (i.e., each of the periods t₃-t₂ and t₅-t₄) may be about 2 minutes.

The purge controlling module 80 controls the flow rate adjusting device 76 to supply the protective gas into the container 60 to purge during a purging period including at least two main periods and at least one sub period. Here, the main period and the sub period are set alternately on a time axis. Moreover, a maximum supply flow rate per unit time during the sub period is at or below 10% of a maximum supply flow rate per unit time during the last main period, and at or below 10% of a maximum supply flow rate per unit time during the next main period.

Here, the main period is a period during which fresh protective gas is actively supplied into the container 60. Moreover, the sub period is a period during which the protective gas inside the container 60 is waited to be dispersed evenly inside the container 60.

In Fig. 3(A), the period from the start of purging to the time t₅ is the purging period. Each of the periods from the start of purging to the time t₁, from the time t₂ to the time t₃, and from the time t₄ to the time t₅ corresponds to the main period. Moreover, each of the periods from the time t₁ to the time t₂, and the time t₃ to the time t₄ corresponds to the sub period.

In Fig. 3(A), the purge controlling module 80 controls the flow rate adjusting device 76 to set the maximum supply flow rate per unit time during the sub period (i.e., each of the periods from the time t₁ to the time t₂, and the time t₃ to the time t₄) to zero so that the protective gas is intermittently supplied into the container 60 during the purging period (i.e., the period from the start of purging to the time t₅) to purge.

### (Effects)

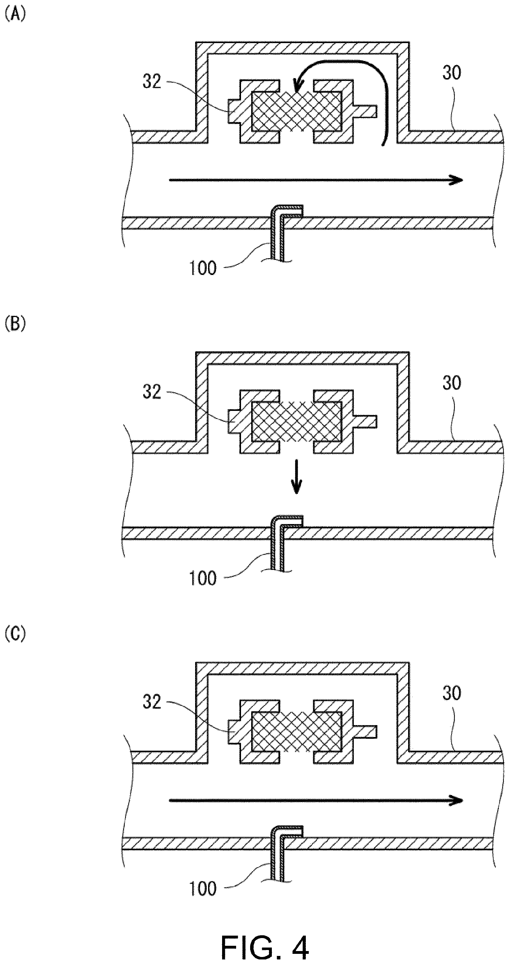

The purging device 70 according to this embodiment supplies the protective gas into the container 60 to purge during the purging period so that, as illustrated in Fig. 3(A), the maximum supply flow rate per unit time during the sub period is at or below 10% of the maximum supply flow rate per unit time during the last main period, and at or below 10% of the maximum supply flow rate per unit time during the next main period. Therefore, compared to the case of purging while not changing the flow rate of the protective gas supplied into the container 60 (the case illustrated in Fig. 3(B)), the purging duration can be shortened by a time "t'-t₅." Reasons for this shortening of the purging duration are described with reference to Figs. 4(A) to 4(C).

Figs. 4(A) to 4(C) are schematic diagrams illustrating effects when purging is performed by the robot system according to this embodiment. Note that Fig. 4(A) illustrates a state where the protective gas is supplied into the container 60, Fig. 4(B) illustrates a state where the supply of the protective gas into the container 60 is suspended, and Fig. 4(C) illustrates a state where the supply of the protective gas into the container 60 is started again after suspending the supply of the protective gas.

Generally, the robot 20 having the pressurized explosion-proof structure undergoes a purging accuracy test before shipping. One example of the purging accuracy test is described. First, through-holes are formed at a few locations in the robotic arm 30. Then, suction parts 100 are inserted through the respective through-holes.

Then, helium gas is filled inside the container 60 as protective gas, and purging is carried out until concentration of the helium gas becomes below a certain value. At this time, gas inside the container 60 is sucked by the suction parts 100 inserted into the container 60, and the concentration of the protective gas contained in the sucked gas is measured by a concentration measuring device (not illustrated) so as to determine whether the concentration of the helium gas is below the certain value. Next, carbon dioxide is filled as protective gas and purging is carried out until concentration of carbon dioxide becomes below a certain value. At this time, a process of determining whether the concentration of carbon dioxide is below the certain value is similar to the case of helium gas.

The suction parts 100 are often provided in or around intricate spaces where the protective gas is difficult to flow. As illustrated in Figs. 4(A) to 4(C), the servomotor 32 is one example of the intricate spaces. In such an intricate space, as illustrated in Fig. 4(A), a vortex flow is generated and a part of the protective gas stays. Therefore, since it takes time to lower the concentration of the protective gas (e.g., helium gas and carbon dioxide) contained in the gas to the given value, the purging duration becomes longer. Note that, when the protective gas is carbon dioxide, reducing the concentration is especially difficult since carbon dioxide is heavier than air.

In this respect, as illustrated in Fig. 4(B), the protective gas staying in the intricate space (here, the servomotor 32) flows out when the supply of the protective gas is suspended (supplying at or below 10% of the immediately before). Then, by again supplying the protective gas which was suspended (supplying at or above 10 times of the immediately before), as illustrated in Fig. 4(C), the protective gas flown out from the intricate space flows into the discharging passage 74 together with other protective gas. Therefore, compared to the case where the protective gas is continuously supplied, the concentration of the protective gas contained in the gas in or near the intricate space can be lowered within a shorter period of time.

Because of the reasons described above, the purging device 70 according to this embodiment can shorten the purging duration while supplying the protective gas into the container 60 defining the periphery of the pressurized explosion-proof structure.

Moreover, in the purging device 70 according to this embodiment, the purge controlling module 80 controls the flow rate adjusting device 76 to set the maximum supply flow rate per unit time during the sub period to zero so that the protective gas is intermittently supplied into the container 60 during the purging period to purge. Therefore, the effects achieved by the present disclosure can be remarkable.

Moreover, in this embodiment, as illustrated in Fig. 3(A), the purge controlling module 80 controls the flow rate adjusting device 76 to supply the protective gas into the container 60 to purge during the purging period so that a period in a first main period (i.e., the period from the start of purging to the time t₁), during which a supply flow rate per unit time is at or above 10 times of the maximum supply flow rate per unit time during the next sub period (i.e., the period from the time t₁ to the time t₂) is longer than a period in a second main period (i.e., the period from the time t₃ to the time t₄), during which a supply flow rate per unit time is at or above 10 times of the maximum supply flow rate per unit time during the last sub period (i.e., the period from the time t₁ to the time t₂). Therefore, the purging device 70 can purge the container 60 while suppressing an increase in time required for filling the protective gas inside the container 60. As a result, the effects achieved by the present disclosure can be remarkable.

Moreover, in this embodiment, the purge controlling module 80 adjusts the opening of the first control valve 77 (control valve) so as to control the flow rate of the protective gas supplied into the container 60. Therefore, the purging duration can be shortened in the simple configuration.

Moreover, in this embodiment, the purging device 70 is used for the robot 20 including the pressurized explosion-proof structure, and thus, the purging duration can be shortened in the robot system 10 including the robot 20.

Moreover, in this embodiment, the flow rate adjusting device 76, the robotic arm 30, and the end effector 40 are placed in the first area where the explosive atmosphere exists, and protective gas supplying source 71, the purge controlling module 80, and the robot controlling module 50 are placed in the second area where the explosive atmosphere does not exist. Therefore, safety of the robot system 10 can be secured.

### (Purging Method)

A purging method according to the present disclosure is described considering a case in which the purging device 70 according to this embodiment is used, for example.

First, the robot 20 including the pressurized explosion-proof structure and the purging device 70 are prepared (First Step). That is, here, the robot system 10 is prepared.

After First Step, the purging device 70 is attached to the robot 20 (Second Step). In detail, the supplying passage 72 (passage) and the discharging passage 74 are inserted and attached to the container 60. Moreover, the flow rate adjusting device 76, the robotic arm 30, and the end effector 40 are placed in the first area where the explosive atmosphere exists, and the protective gas supplying source 71, the purge controlling module 80, and the robot controlling module 50 are placed in the second area where the explosive atmosphere does not exist.

Finally, after First and Second Steps, the purge controlling module 80 controls the flow rate adjusting device 76 to supply the protective gas into the container 60 to purge during the purging period including at least two main periods and at least one sub period (Third Step). At this time, the main period and the sub period are set alternately on the time axis. Moreover, the maximum supply flow rate per unit time during the sub period is at or below 10% of the maximum supply flow rate per unit time during the last main period, and at or below 10% of the maximum supply flow rate per unit time during the next main period.

Note that, at Third Step, the purge controlling module 80 may control the flow rate adjusting device 76 to set the maximum supply flow rate per unit time during the sub period to zero (i.e., protective gas is not supplied into the container 60 during each of the periods from t₁ to t₂, and from t₃ to t₄) so that the protective gas is intermittently supplied into the container 60 during the purging period to purge.

Moreover, at Third Step, the purge controlling module 80 may control the flow rate adjusting device 76 to supply the protective gas into the container 60 to purge during the purging period so that the period in the first main period, during which the supply flow rate per unit time is at or above 10 times of the maximum supply flow rate per unit time during the next sub period, is longer than the period in the second main period, during which the supply flow rate per unit time is at or above 10 times of the maximum supply flow rate per unit time during the last sub period (i.e., as illustrated in Fig. 3(A), the period from the start of purging to t₁ is longer than the period from t₂ to t₃).

### (Modifications)

It is apparent for a person skilled in the art from the above description that many improvements and other embodiments of the present disclosure are possible. Therefore, the above description is to be interpreted only as illustration, and it is provided in order to teach a person skilled in the art the best mode to implement the present disclosure. The details of the structures and/or the functions may be substantially changed, without departing from the spirit of the present disclosure.

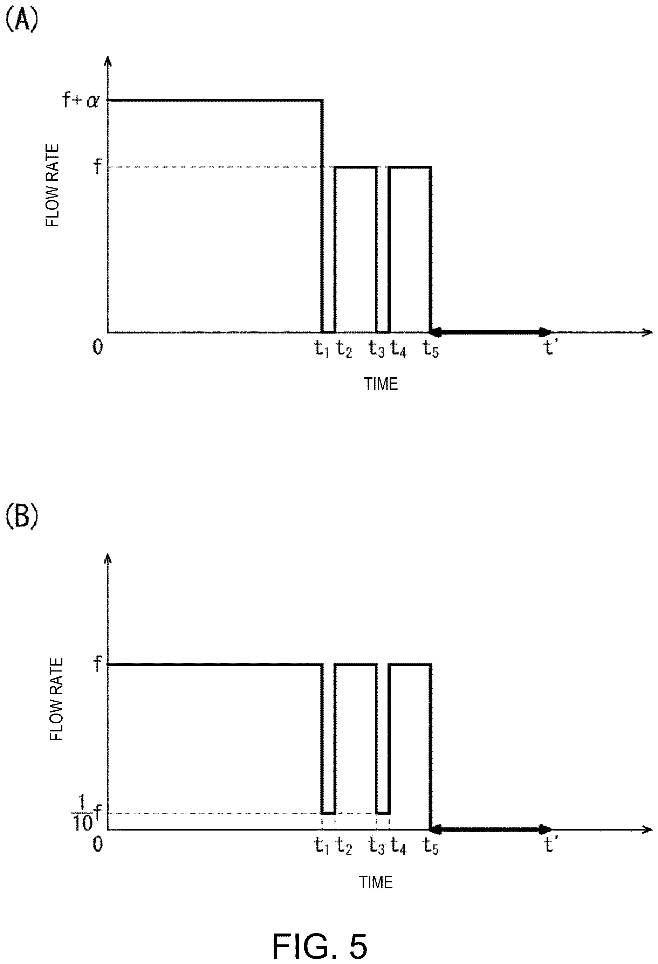

Figs. 5(A) and 5(B) are graphs schematically illustrating effects when the purging is performed by a modification of the robot system according to this embodiment.

Although in this embodiment the maximum supply flow rate per unit time in each main period is constant at "f," it is not limited to this. For example, as illustrated in Fig. 5(A), the purge controlling module 80 may control the flow rate adjusting device 76 to supply the protective gas into the container 60 to purge during the purging period so that the maximum supply flow rate per unit time during the first main period (i.e., the period from the start of purging to the time t₁) is larger than the maximum supply flow rate per unit time during the second main period (i.e., the period from the time t₂ to the time t₃). In Fig. 5(A), the maximum supply flow rate per unit time during the first main period is f+α, and the maximum supply flow rate per unit time during the second main period is f.

By purging as described above, the purging device 70 can purge the container 60 while suppressing the increase in time required for filling the protective gas inside the container 60. Therefore, compared to the case of purging while not changing the flow rate of the protective gas supplied into the container 60 (the case illustrated in Fig. 3(B)), the purging duration can be shortened by the time "t'-t₅" (or more). As a result, the effects achieved by the embodiment can be remarkable. Note that, as illustrated in Fig. 5(A), the maximum supply flow rate per unit time during a third main period may be f, or if more than four main periods exist, the maximum supply flow rates per unit time during a fourth main period and a main period thereafter may each be set to f.

Although in this embodiment the maximum supply flow rate per unit time during the sub period is set to zero so that the protective gas is intermittently supplied into the container 60 during the purging period to purge, it is not limited to this. For example, as illustrated in Fig. 5(B), the purge controlling module 80 may control the flow rate adjusting device 76 to supply the protective gas into the container 60 during each sub period so that the maximum supply flow rate per unit time during the sub period is 10% of the maximum supply flow rate per unit time during the last main period, and 10% of the maximum supply flow rate per unit time during the next main period.

In Fig. 5(B), the maximum supply flow rate per unit time during a first sub period (i.e., the period from the time t₁ to the time t₂) is f/10, and the maximum supply flow rate per unit time during a second sub period (i.e., the period from the time t₃ to the time t₄) is also f/10. Then, in Fig. 5(B), the maximum supply flow rate per unit time during the first main period (i.e., the period from the start of purging to the time t₁) is f, and the maximum supply flow rate per unit time during the second main period (i.e., the period from the time t₄ to the time t₅) is also f.

Also when purging is carried out as described above, compared to the case of purging while not changing the flow rate of the protective gas supplied into the container 60 (the case illustrated in Fig. 3(B)), the purging duration can be shortened, for example, by the time "t'-t₅."

Note that the purge controlling module 80 may carry out purging during the purging period in modes other than the modes illustrated in Fig. 3(A), and Figs. 5(A) and 5(B) as long as the purge controlling module 80 controls the flow rate adjusting device 76 to supply the protective gas into the container 60 to purge during the purging period including at least two main periods and at least one sub period, the main period and the sub period are set alternately on the time axis, and the maximum supply flow rate per unit time during the sub period is at or below 10% of the maximum supply flow rate per unit time during the last main period, and at or below 10% of the maximum supply flow rate per unit time during the next main period.

For example, the supply flow rate may vary during each of the main period and the sub period. For example, the graphs in Fig. 3(A), and Figs. 5(A) and 5(B), which indicate the relation between the supply flow rate and time when the protective gas is supplied into the container 60, may each have a sine-wave shape, an irregularly varying shape, or other shapes. Moreover, the maximum supply flow rates during at least two main periods may be different from each other.

Although in this embodiment the flow rate adjusting device 76 is placed in the first area where the explosive atmosphere exists, it is not limited to this. For example, the flow rate adjusting device 76 may be placed in the second area where the explosive atmosphere does not exist. Alternatively, a part of the flow rate adjusting device 76 (e.g., the first control valve 77) may be placed in the first area, and the other parts of the flow rate adjusting device 76 (e.g., the second control valve 78) may be placed in the second area. In this case, the control valve placed in the first area is preferred to be a control valve which operates at a low voltage, for example.

Although in this embodiment a part of the pedestal 21 and the robotic arm 30 constitute the container 60, it is not limited to this. For example, if electrical equipment is not provided inside the pedestal 21, at least a part of the robotic arm 30 may constitute the container 60.

Although in this embodiment the robot 20 is a painting robot which performs painting to an automobile, etc., and the first area is the painting place, it is not limited to this. For example, the robot 20 may be a robot which performs a work at a gas station, and the first area may be the gas station.

Although in this embodiment the pressurized explosion-proof structure is provided to the robot 20, it is not limited to this. The pressurized explosion-proof structure may be provided to another electrical equipment. That is, the purging device 70 may be used for a pressurized explosion-proof structure of electrical equipment other than the robot 20.

### DESCRIPTION OF REFERENCE CHARACTERS

- 10: Robot System
- 20: Robot
- 21: Pedestal
- 30: Robotic Arm
- 31: Link
- 32: Servomotor
- 40: End Effector
- 50: Robot Controlling Module
- 60: Container
- 70: Purging Device
- 71: Protective Gas Supplying Source
- 72: Supplying Passage
- 74: Discharging Passage
- 76: Flow Rate Adjusting Device
- 77: First Control Valve
- 78: Second Control Valve
- 80: Purge Controlling Module
- 90: Controller
- 98: Partition

## Claims

1. A purging device configured to purge a container defining a periphery of a pressurized explosion-proof structure by supplying protective gas into the container, comprising:
a protective gas supplying source;
a passage configured to introduce the protective gas from the protective gas supplying source into the container;
a flow rate adjusting device configured to adjust a flow rate of the protective gas supplied from the protective gas supplying source into the container; and
a purge controlling module configured to purge by controlling the flow rate adjusting device, the purge controlling module controlling the flow rate adjusting device to supply the protective gas into the container to purge during a purging period including at least two main periods and at least one sub period,
wherein the main period and the sub period are set alternately on a time axis, and
wherein a maximum supply flow rate per unit time during the sub period is at or below 10% of a maximum supply flow rate per unit time during the last main period, and at or below 10% of a maximum supply flow rate per unit time during the next main period.

2. The purging device of claim 1, wherein the purge controlling module controls the flow rate adjusting device to set the maximum supply flow rate per unit time during the sub period to zero so that the protective gas is intermittently supplied into the container during the purging period to purge.

3. The purging device of claim 1 or 2, wherein the purge controlling module controls the flow rate adjusting device to supply the protective gas into the container to purge during the purging period so that a period in a first main period, during which a supply flow rate per unit time is at or above 10 times of a maximum supply flow rate per unit time during the next sub period, is longer than a period in a second main period, during which a supply flow rate per unit time is at or above 10 times of the maximum supply flow rate per unit time during the last sub period.

4. The purging device of any one of claims 1 to 3, wherein the purge controlling module controls the flow rate adjusting device to supply the protective gas into the container to purge during the purging period so that a maximum supply flow rate per unit time during a first main period is larger than a maximum supply flow rate per unit time during a second main period.

5. The purging device of any one of claims 1 to 4, wherein the flow rate adjusting device includes a control valve provided to the passage, and
wherein the purge controlling module adjusts an opening of the control valve so as to control the flow rate of the protective gas supplied into the container.

6. A robot system, comprising:
the purging device of any one of claims 1 to 5; and
a robot including the pressurized explosion-proof structure,
wherein the robot includes a robotic arm, an end effector attached to a tip-end part of the robotic arm, and a robot controlling module configured to control the robotic arm and the end effector, and
wherein at least a part of the robotic arm constitutes the container.

7. The robot system of claim 6, further comprising a partition configured to divide a first area in which explosive atmosphere exists from a second area in which the explosive atmosphere does not exist,
wherein the robotic arm and the end effector are placed in the first area, and the protective gas supplying source, the purge controlling module, and the robot controlling module are placed in the second area.

8. A method of purging a container defining a periphery of a pressurized explosion-proof structure by supplying protective gas into the container, comprising the steps of:
preparing the pressurized explosion-proof structure and the purging device of any one of claims 1 to 5;
attaching the purging device to the pressurized explosion-proof structure, after the pressurized explosion-proof structure and the purging device are prepared; and
controlling the flow rate adjusting device by the purge controlling module to supply the protective gas into the container to purge during a purging period including at least two main periods and at least one sub period, after the purging device is attached,
wherein the main period and the sub period are set alternately on a time axis, and
wherein a maximum supply flow rate per unit time during the sub period is at or below 10% of a maximum supply flow rate per unit time during the last main period, and at or below 10% of a maximum supply flow rate per unit time during the next main period.
